# EUROPEAN PATENT SPECIFICATION

(11) **EP 2 478 464 B1**
(45) Date of publication and mention of the grant of the patent: **08.05.2019**
(21) Application number: 10814860.2
(22) Date of filing: 14.09.2010
(51) Int. Cl.: G06K 9/00, G06K 9/78, G06K 9/20, H04N 5/232, H04N 5/225, H04N 5/247, H04N 5/33

(54) **SACCADIC DUAL-RESOLUTION VIDEO ANALYTICS CAMERA**
SAKKADISCHE VIDEOANALYSEKAMERA MIT DOPPELAUFLÖSUNG
CAMÉRA D'ANALYSE VIDÉO À DOUBLE RÉSOLUTION SACCADÉE

(30) Priority: 14.09.2009 US 242085 P
(43) Date of publication of application: 25.07.2012
(73) Proprietor: VIION Systems Inc., Montreal, Quebec H3K 1G6 (CA)
(72) Inventor: MC MORDIE, David, Montreal Quebec H3K 2T7 (CA); KELLY, Michael, Findlay, Montreal Quebec H4X 1Y1 (CA)
(74) Representative: Somervell, Thomas Richard
(86) International application number: PCT/CA2010/001432
(87) International publication number: WO 2011/029203

(56) References cited:
- WO-A2-2006/040687
- US-A- 6 061 086
- US-A- 6 061 086
- US-A1- 2008 068 451
- US-A1- 2009 040 302

## Description

### Cross-Reference to Related Applications

This application claims priority to and the benefit of U.S. provisional patent application serial number 61/242,085, filed September 14, 2009, entitled "Saccadic Dual-Resolution Video Analytics Camera."

### Field of Invention

The invention relates generally to systems and methods for the detection, tracking and recognition of objects, and more specifically for detection, tracking and recognition of faces, eyes, irises and/or other facial characteristics, license plates and other objects of interest in a variety of environments and conditions.

### Background

Image and video processing software and systems have long sought to automatically identify individuals, license plates, left luggage and other objects and events of interest. The benefits to such applications are numerous and significant, for example: early warning systems for terror attacks, missing person detection, user identification, vehicle identification, and many others. However, despite very high performance in laboratory testing, the effectiveness of video analytics in real-world applications remains limited.

The limitations of conventional solutions are the result of a number of system and environmental factors, such as illumination, object pose, shadows, limited resolution and noise. Among these, perhaps the most significant is resolution. In real world environments, capturing images of objects of interest (e.g., faces, individual characteristics such as irises, license plates, abandoned luggage, etc.) with sufficient resolution to permit recognition, while at the same time providing sufficient field-of-view to cover a significant area, poses a major challenge. For example, if a camera is zoomed-out to capture objects of interest within a large area such as an entire room, corridor, entrance plaza, roadway or parking lot, the resolution of the captured images is insufficient for automated object recognition.

A second important factor in the performance of current video-analytic systems is illumination. Video analytic systems which exploit currently available video surveillance infrastructure suffer from a lack of controlled illumination, which negatively impacts performance. Some successful commercial systems such as those used for license plate recognition control the illumination though the addition of illumination sources to enhance recognition performance.
US 6,061,086 discloses using a wide-angled camera to capture an image of an entire object and a high-resolution camera to capture images of targets in the object. A two-axis steerable mirror is used to direct the high resolution camera at the targets.

### SUMMARY OF THE INVENTION

Embodiments of the present invention address these and other challenges by applying a two-camera dual resolution approach, with integrated image processing and illumination. The presently claimed invention provides a device for detecting and tracking movement of objects as set forth in claim 1, and a method as set forth in claim 15. Using a wide-angle camera, objects of interest are detected using image processing algorithms operating on very low resolution images of target objects (for example, object diameters which may be as low as 4-10 pixels). The field of view of a second camera fitted with a telephoto lens may then be aimed at the objects using a steerable mirror assembly to capture a high resolution image where the object of interest is predicted to be, based on image acquired by the wide-angle camera. Various image processing algorithms may be applied to confirm the presence of the object in the telephoto image. If an object is detected and the image is of sufficiently high quality, detailed facial, iris, alpha-numeric, or other pattern recognition techniques may be applied to the image. Recognition information is communicated by means of a data network to other devices connected to this network.

In order to address the issue of illumination, an infrared on-axis collimated flash may be used. This provides sufficient illumination to improve performance in dark locations, as well as locations where cast shadows affect the performance of automated object recognition systems. The illuminator flash exploits the same principal as the telephoto camera in that by aiming directly upon the object of interest, a tightly collimated beam using a small amount of illuminator power may be used to substantially augment ambient illumination.

Therefore, in a first aspect, embodiments of the invention relate to a device for detecting objects of interest within a scene. The device includes a wide-angle camera configured to acquire an image of the scene and to detect objects within the scene and a telephoto camera configured to acquire a high-resolution image of the object. A moving mirror assembly is used to adjust the aim of the telephoto camera, and an image processor is configured to identify the location of the objects within the scene and provide commands to adjust the position of the assembly such that the telephoto camera is aimed at the objects. In some cases, the image processor also adjusts video gain and exposure parameters of the captured images. In some cases, a processor is used to identify the objects (such as human anatomical features or license plate characters) based on the high-resolution image.

In some embodiments, the device may also include a collimated near-infrared flash (such as a pulsed infrared laser or near-infrared-emitting diodes) for targeted illumination of the object of interest, and the mirror assembly may position the collimated infrared flash at the object or objects. The moving mirror assembly may include one or more high-precision angular magnetic ring encoders. To position the mirror assembly, the device may also include two voice coil motors. These motors may be connected through a five-link spherical kinematic chain which, when activated, rotates the mirror about two orthogonal axes. The device may instead position the mirror through a five-link planar closed kinematic chain which, when activated, position the lower edge of the mirror assembly. This planar device may also include a slide bearing to constrain a central point on the mirror assembly within the sagittal plane relative to the mirror. In some implementations, the moving mirror assembly includes a tube, a pin joint and a push rod for positioning the mirror assembly about two separate axes. Other implementations may include deformable mirror systems where the reflecting surface shape can be controlled in order to re-direct the telephoto camera's field-of-view.

The device may also include an additional sensor configured to uniquely identify the object of interest, such as cellular telephone electronic serial numbers (ESNs), International Mobile Equipment Identity (IMEI) codes, Institute of Electrical and Electronics Engineers (IEEE) 802.15 (Bluetooth) Media Access Control (MAC) addresses, Radio Frequency Identifier (RFID) tags, proximity cards, toll transponders and other uniquely identifiable radio frequency devices. Data from this sensor may be used for the recognition of individuals and to perform data mining and system validation. The device may also include a video compression module for compressing video data captured by the cameras for storage on a data storage device and or transmission to external devices via network interfaces.

In another aspect, a method for identifying an object within a scene includes acquiring an image of the scene using a first image sensor, wherein the first image sensor comprises a wide-angle camera aimed at the scene. The location of the object within the scene is determined (using, in some cases, angular coordinates relative to the scene), and a mirror assembly is adjusted such that the detected location is presented to a second image sensor. In some cases, the mirror assembly is configured to allow for adjustments using multiple degrees of freedom (e.g., about a horizontal and vertical axis), and/or the conformation of the mirror assembly may be modified. An image of the object substantially higher in resolution that that of the image of the scene is acquired. In some cases, based on the higher-resolution image, the object is identified through image processing algorithms. In some cases the higher resolution image may be transmitted via an attached network for storage and/or processing by other equipment. In some cases, a flash assembly including a pulsed infrared laser or light-emitting diodes may be used to illuminate the object.

### Brief Descriptions of the Drawings

The foregoing and other objects, features, and advantages of the present invention, as well as the invention itself, will be more fully understood from the following description of various embodiments, when read together with the accompanying drawings, in which:
Fig. 1 schematically depicts a functional block diagram for the saccadic dual-resolution camera in accordance with an embodiment of the invention;
Fig. 2 schematically depicts the principal optical, mechanical and electronic components for the saccadic dual-resolution camera in accordance with an embodiment of the invention;
Fig. 3 schematically depicts facial images captured using a wide field of view camera versus those captured with the telephoto camera in accordance with an embodiment of the invention;
Fig. 4 illustrates a cutaway view of an actuator and position sensor servo assembly applicable to precision high speed movement of mirrors in accordance with an embodiment of the invention;
Fig. 5 schematically depicts a dual mirror assembly for the saccadic dual-resolution camera in accordance with an embodiment of the invention;
Fig. 6 schematically depicts a concentric push-rod assembly for the saccadic dual-resolution camera in accordance with an embodiment of the invention;
Fig. 7 schematically depicts a five link spherical closed kinematic chain mechanism used to precisely and simultaneously control two angular displacements of a mirror in accordance with an embodiment of the invention;
Fig. 8 is a flow chart describing a process for implementing a two-stage coarse-fine object identification method using the saccadic dual-resolution camera in accordance with various embodiments of the invention; and
Fig. 9 graphically illustrates timing synchronization of mirror stability with image sensor exposure in order to avoid image motion blur due to mirror movement in accordance with an embodiment of the invention.

### Description of the Invention

In many surveillance and image capture applications, the initial identification of an object of possible interest and the eventual positive recognition of that object may have different image capture and processing requirements. For example, it is common to survey an entire scene involving many different objects or people at different distances and angles with respect to the camera. This requires using a camera with a wide field-of-view, but the resulting resolution for any object within that camera's field is generally too low to permit object recognition. Typically, recognition of a person, a particular item, or set of characters requires higher image capture resolution and may also require more stringent illumination requirements in order to provide sufficient detail for automatic recognition. In addition to image capture constraints, to effectively detect and recognize individuals, objects of interest or license plates within a scene may require performing the tasks of presence detection and recognition concurrently as the objects pass through a scene quickly or turn away from the camera.

To balance the need for capturing a wide-angle overview of a scene while simultaneously identifying particular objects or people within the scene, the devices and techniques described herein use a combination of electro-mechanical, optical and software components to position a telephoto camera's optical axis within the field of view of a fixed wide-angle camera, as well provide electronic and computerized processes to capture and process the captured video data. For example, a wide-angle camera may be mounted at a fixed location and orientated and trained on a scene and/or objects. Video images from the wide-angle camera are processed in real-time to identify likely candidate locations for objects of interest. Objects may include people, eyes, automobiles, retail items, inventory items, UPC symbols, and other optically-recognizable items.

Once a location of an object (or objects) of interest within a scene have been identified by processing images from the wide-angle camera, its angular coordinates within the image are passed to a mirror control assembly, which mechanically adjusts a mirror (or a series of mirrors) so as to train a telephoto camera on each of the objects of interest, acquiring one or more frames containing each object before proceeding to the next object. Acquisition of images is synchronized with the mirror repositioning such that an image may be acquired when the mirror is sufficiently stationary to provide high image quality. The resulting frames from the telephoto camera may be reassembled into video sequences for each object of interest and provided to a video processor for detailed object recognition. Either or both video sequences may also be compressed and made available for storage as compressed video streams.

During operation, the following data streams are available for processing, analysis and/or storage: (i) a wide-angle overview video stream, available for streaming to a monitor or storage device in the same manner as conventional video surveillance equipment; (ii) video streams and/or still images of objects of interest within the scene, time-coordinated with the wide-angle overview video stream; and (iii) metadata indicating object-specific information recognized from the video streams. The metadata may include, for example, extracted facial descriptors, iris descriptors, license plate recognition character strings or other object-specific information. The metadata may also be time-indexed to allow coordination with the video streams.

This technique may be used, for example, in face recognition applications such that the detection and recognition of a particular individual in a crowd becomes practical. By processing the wide-angle video feed with object detection methods and by processing the telephoto feed with item recognition and analysis methods, the system and techniques described herein may also be used to implement numerous video and image analytic applications, such as the following: (i) unattended luggage detection; (ii) loitering detection; (iii) human presence detection; (iv) animal detection; (v) virtual trip wires; (vi) people counting; (vii) suspicious movement detection; (viii) license plate recognition; and (ix) iris recognition.

Equipment used to detect cellular telephone electronic serial numbers (ESNs), International Mobile Equipment Identity (IMEI) codes and/or 802.15 (Bluetooth) MAC addresses may also be included in the system. Using this additional equipment, unique identification information may be associated with face information, license plate information or other video-analytic information to facilitate confirmation and traceability of video analytic information such as faces or license plate numbers. Identification information may also be directly associated with timestamps in one or more of the video feeds.

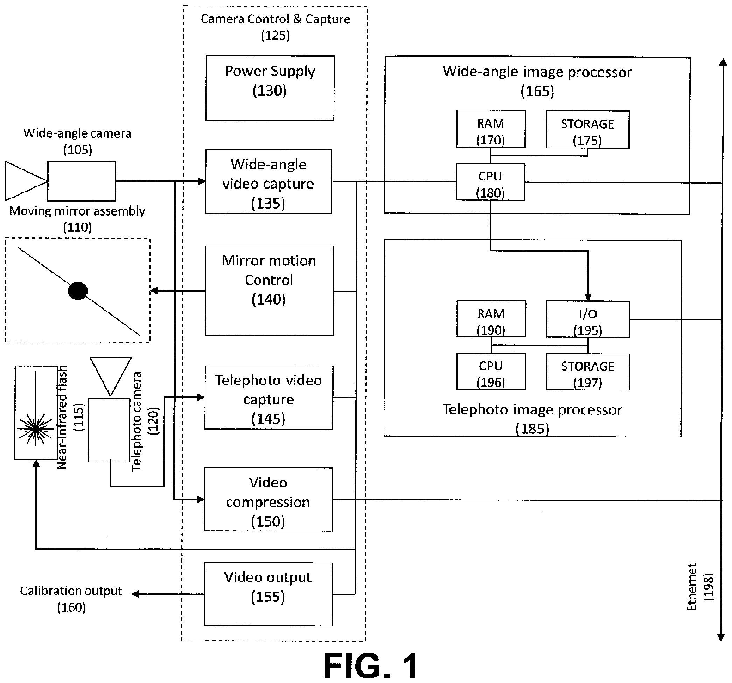

Referring now to Fig. 1, a system for identifying objects within a scene includes a wide-angle camera 105, a moving mirror assembly 110, a near-infrared flash 115, a telephoto camera 120, various camera control and capture components 125, calibration video output 160, an wide-angle image processor 165, a telephoto image processor 185, and an Ethernet connection 198. The wide-angle camera 105 may be any visible or infrared (near-infrared or thermo-graphic) spectrum video camera with either analog or digital output format. This camera serves to capture a wide-angle video feed surveying a scene which may include items such as people, objects of interest or license plates. Images are captured with sufficient detail to enable detection and tracking of these items within the video feed. The location of these tracked items provides guidance to the moving mirror assembly 110, which directs the field-of-view of the telephoto camera 120 toward each detected and tracked item in sequence.

The moving mirror assembly may be designed using various mechanisms and technologies, several of which are described below, but in all cases, serves to aim the field of view of the telephoto camera toward candidate item locations, so that each new video frame captured by the telephoto camera may be captured at a new location in the scene, corresponding to a particular item. The near-infrared flash 115 includes infrared emitting diodes and/or diode lasers capable of operating in the near-infrared electromagnetic spectrum, where visibility to humans is minimized, but response by charge-coupled device (CCD) and conductive metal oxide semiconductor (CMOS) image sensors is sufficient to permit effective covert illumination of a subject. In addition to infrared emitting diodes, the near-infrared flash also includes a driver circuit permitting precise control of flash start time and period, as well as illuminator intensity. The telephoto camera 120 serves to capture high-resolution video of faces or other objects of interest at significant distances, with output in either analog or digital format. Focal length and aperture of the lens used on this camera are chosen by application in order to achieve the desired range and depth-of-field, but in all cases the focal length of the telephoto camera lens is significantly longer than that of the wide-angle camera lens.

The camera control and capture subsystem 125 includes the following principal functional components: a power supply 130 to condition and distribute power to the electronic and mechanical assemblies from standard electric power sources, a wide-angle video capture device 135, a mirror motion control assembly 140, a telephoto video capture assembly 145, a video compression module 150, and a calibration video output jack 155. The wide-angle and telephoto capture devices 135 and 145 provide the means to acquire video information from the wide-angle 105 and telephoto 120 cameras into computer memory for processing by the wide-angle image processor 165 or the telephoto image processor 185, respectively.

The wide-angle image processor 165 includes the following principal functional components: random-access memory (RAM) 170, data storage 175, and one or more central processing units (CPU) 180. These components are arranged to implement a computer with onboard software capable of handling processing of video data acquired by the video capture devices 135 and 145 and communicating with both the telephoto image processor 185 and an attached computer network 198. In some embodiments, the central processing unit may be replaced with a digital signal processor (DSP) while its function remains the same.

The telephoto image processor 185 includes the following principal functional components: random-access memory (RAM) 190, an input/output interface (I/O) 195; a central processing unit (CPU) 196, and data storage 197. These components are arranged to implement a computer with onboard software capable of processing video data acquired by the video capture devices 135 and 145 and communicating with both the telephoto image processor 185 and an attached computer network 198. In some embodiments, the central processing unit may be replaced with a digital signal processor (DSP) while its function remains the same. The function of each system component is described in greater detail below.

In some embodiments, the wide-angle image processor 165 and telephoto image processor 185 may be combined so that the processing functions of each are handled by a single computing device.

Video from the wide-angle camera may be compressed using video compression technologies such as H.263 or H.264 in order to facilitate the transmission of the video data to storage and/or management servers over the network 198. The video compression module 150 may employ a digital signal processor (DSP) or other computational equipment and software algorithms, or may use purpose-built compression hardware to perform video compression. The I/O interface may comply with one or more network standards such as 802.3 Ethernet, 802.11 wireless networking, 802.15 (Bluetooth), HDMI, RS-232, RS-485 and RS-422 to allow communication of compressed video data, metadata and alarm information to external systems over the network 198.

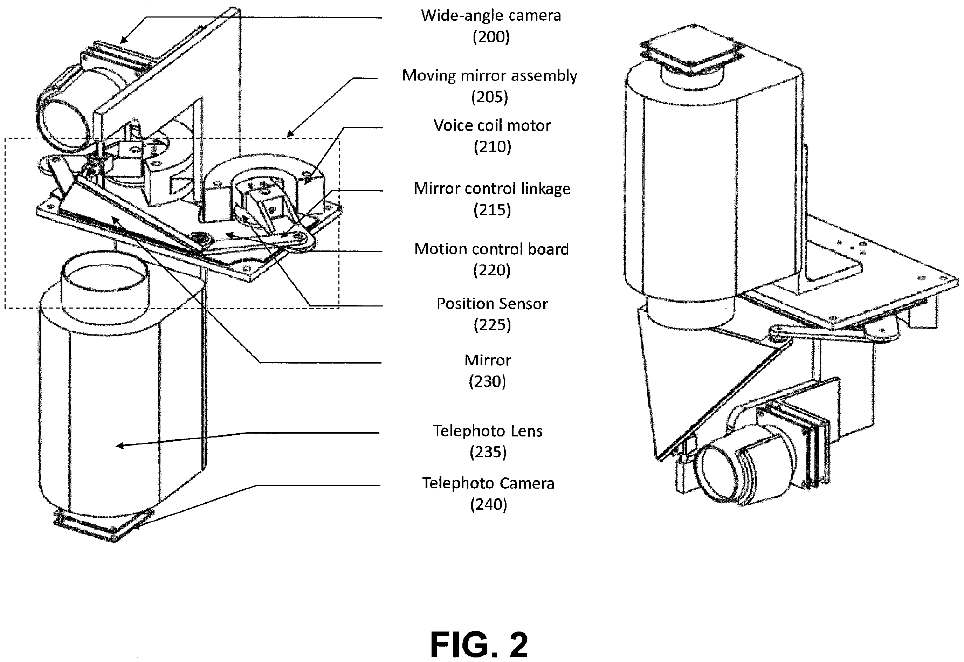

Referring to Fig. 2, the principal optical, mechanical and electronic components for a saccadic dual-resolution camera include a wide-angle camera 200, a moving mirror assembly 205, a telephoto lens 235 and a telephoto camera 240.

In one embodiment, the moving mirror assembly 205 includes a voice coil motor 210, a mirror control linkage assembly 215, a motion control board 220, one or more position sensors 225, and mirror 230. Each actuator 210 is used to position one of the mirror control linkages 215 which in turn repositions the mirror 230. Position feedback comes from the two position sensors 225, which are connected to each motion control board 220. Desired angular positions are communicated to motion control board 220 which uses standard feedback control techniques to rapidly and precisely re-position each actuator shaft.

In some implementations, the wide-angle camera 200 covers a visual field suitable both for video surveillance purposes and to generally identify objects of interest and where the objects are in relation to the overall scene. The wide-angle camera may be rigidly fixed to the chassis of the two-camera assembly in such a manner that the angular coordinates of objects found in its field-of-view correspond to the angular coordinates of the moving mirror assembly. In other cases, the wide-angle camera may be connected to a pan-tilt motor that adjusts the physical orientation of the camera according to known global, room or image coordinates. The wide-angle camera 200 also includes an image sensor, lens and optical filter.

The telephoto camera employs a lens 235 that has a significantly longer focal length than that of the wide-angle camera 200. The telephoto camera provides a high-resolution, high quality images needed to conduct accurate recognition of objects of interest. Using the coordinates of each object of interest based on the image(s) from the wide-angle camera, the moving mirror assembly 205 is positioned so as to train the telephoto camera's optical axis towards the object of interest. Additionally, brightness information from the wide-angle camera image, in combination with the gain and exposure settings for the wide-angle camera, are used to provide an estimate as to the desired exposure duration and gain required to capture a high quality image of the object of interest. Optionally, information about the motion of the object of interest and the number of objects of interest in the scene may also be used to adjust exposure and to determine how many sequential frames of the object of interest are captured. Images from the telephoto camera may then be digitized and provided to the telephoto image processor for recognition.

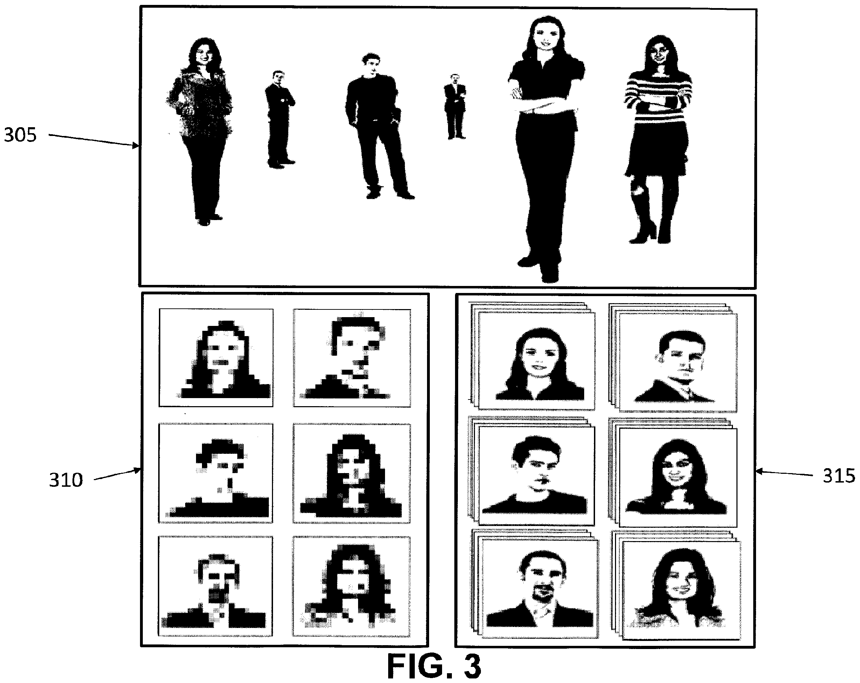

Fig. 3 illustrates one approach for identifying human faces in a scene 305 containing multiple people located at varying distances from the camera. Video of the entire scene 305 from the wide-angle camera is analyzed computationally using one or more computer-vision and/or video analytics algorithms in order to locate and track the position of heads within the camera's field-of-view. The location of each person is then used to direct the moving mirror assembly to aim the telephoto camera field of view in order to rapidly acquire high resolution images of each individual's face in sequence. Image matrix 310 depicts images captured using the wide-angle camera; these images have resolution insufficient for automatic recognition. Image matrix 315 depicts images captured using the telephoto camera. The longer focal length of the telephoto camera lens allows the acquisition of much higher resolution facial images, permitting automatic recognition using off-the-shelf facial recognition algorithms.

By commanding the moving mirror assembly to aim the telephoto camera field-of-view to a new location in the scene 305 for each new video frame, the video frames for each object may be assembled chronologically to produce a video sequence unique to each tracked object 315 within the scene 305 (in this case a human head or face). Since the telephoto camera video feed is divided into multiple video sub-feeds in this manner, each sub-feed has a frame-rate which is approximately equal to the frame-rate of the telephoto camera feed divided by the number of objects-of-interest being simultaneously tracked. In this manner, multiple concurrent high-resolution video feeds of different objects-of-interest within a scene may be created from a single video feed.

Video analytic and computer vision algorithms may also be used to locate and identify multiple moving vehicles within the wide-angle camera's field-of-view. By then aiming the telephoto camera towards the location of each vehicle's license plate in sequence, the system may be used to generate multiple high resolution video feeds of license plates, each corresponding to a particular vehicle within the scene. Using license plate recognition or optical character recognition algorithms, embodiments of the present invention may then be used to read the characters on the license plates.

Collimated infrared illumination may be included in the telephoto camera assembly, and aimed using the same moving mirror assembly as the telephoto camera, or optionally a second moving mirror assembly. The source of illumination may be a pulsed infrared laser or one or more infrared light emitting diodes (LEDs). The pulsing of the illumination source is also synchronized with the telephoto camera's exposure cycle and hence with the movement of the mirror. Beam collimation is achieved by means of optical lenses and/or mirrors.

In order to rapidly re-direct the telephoto camera's optical axis, high performance motors are employed. The moving mirror assembly aims the optical axis of the telephoto camera on the object of interest. Using high performance motors and position/angle feedback sensors, the assembly controls both the horizontal and vertical angles of the mirror in order to aim the telephoto lens throughout the scene. Due to the telephoto camera's zoomed-in field of view, the mirror re-direction system must be fully stopped and stabilized at a precise location during image capture in order to acquire sharp (non-blurry) images of target objects in the scene. To achieve the stability, positioning accuracy and repeatability needed to ensure non-blurry image capture centered on the target object, ultra-high precision mechanical servos are employed.

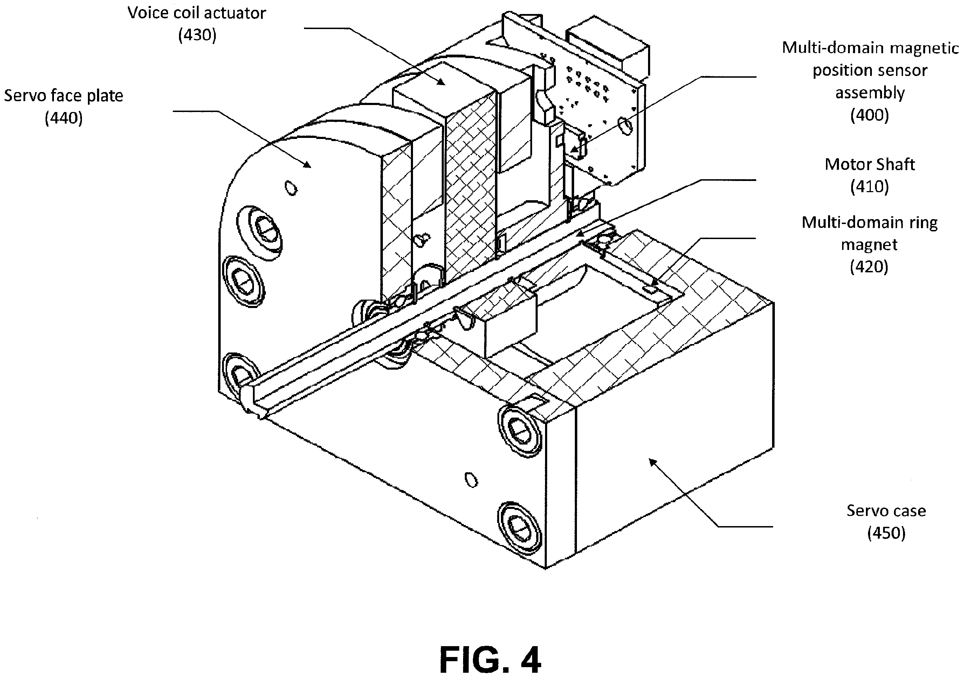

Fig. 4 depicts a rotary servo in which a multi-domain magnetic position encoder assembly 400 is used with a multi-domain magnetic ring 420 to providing repeatable positioning of the mirror assembly within an accuracy of approximately +/- 2 x 10⁻⁵ radians. In order to move the mirror quickly enough to stop and stabilize within the time between successive exposures of video fields, a powerful actuator 430 having low mass and/or inertia is used to drive the shaft 410 connected to the mirror positioning assembly. In some embodiments, a rotary voice coil actuator is used to achieve the necessary combination of high speed and low inertia and/or mass. The combination of a powerful, low-mass/inertia actuator and a precision sensing mechanism results in the short mirror repositioning times which are needed to allow the mirror to be trained on a new subject for each new video frame of field.

Various optical-mechanical assemblies may be used to achieve precision pointing of the mirror. In one particular implementation, a closed-kinematic chain linkage is used to position the mirror. Two voice coil motors, connected by a five-link planar closed kinematic chain, position the lower edge of the mirror within the horizontal plane. In the sagittal plane, a central point on the mirror is constrained to move vertically using a slide bearing or bushing.

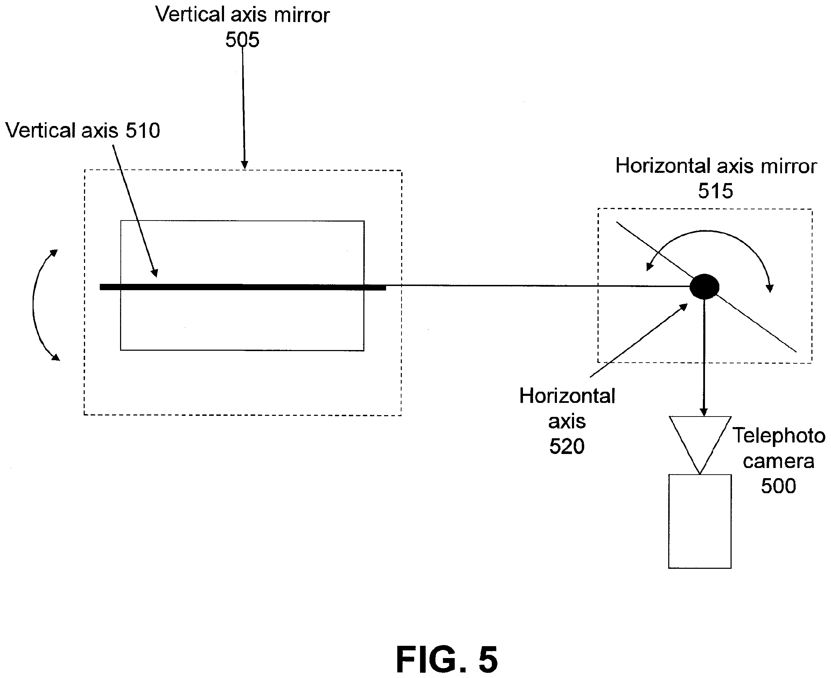

In an alternative adaptation, and as depicted in Fig. 5, the angular positions of two mirrors (horizontal axis mirror 515 and vertical axis mirror 505) are controlled directly by the output shafts of two separate servo actuators. These mirrors form a compound reflection system which trains the telephoto camera 500 optical axis precisely within the scene. Due to the angular sweep of the first mirror, the mirror furthest from the telephoto camera is generally significantly larger than the mirror closest to the telephoto camera. Also, light loss from reflections is double that of the three-dimensional linkage system where a single mirror performs the training of the telephoto camera.

The compound mirror arrangement described above provides a lower-cost means to precisely direct the telephoto camera's optical axis, relative to the more complex mirror pointing assemblies depicted in Figs. 2, 6 and 7. It also uses a minimum number of moving parts and joints, which is reduces the likelihood of wear and failure over the lifetime of the assembly. However, a disadvantage of this approach is that the optical distortion caused by compound reflections across two mirrors may have a considerable impact on image quality.

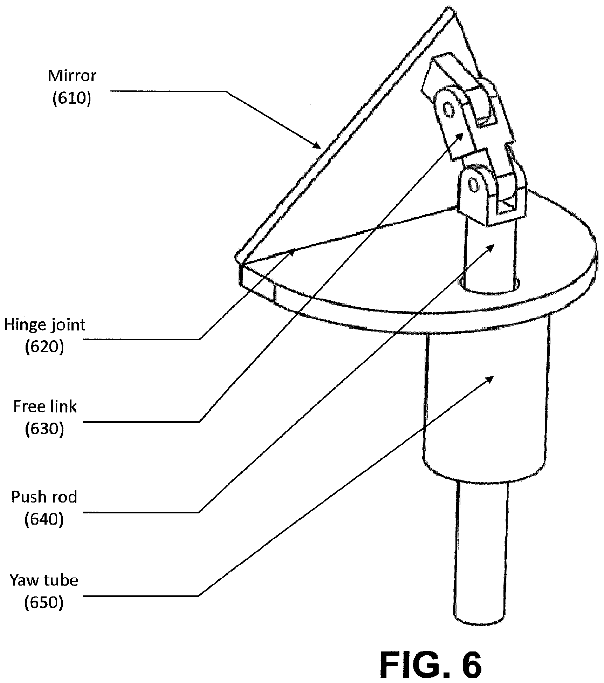

In another embodiment, depicted in Fig. 6, the mirror 610 is attached to a yaw axis control tube and base plate 650 by means of a hinge joint 620. While rotation of the yaw tube controls positioning about the mirror's yaw axis, a push rod 640, passing through the center of the tube, controls rotation about the second axis by pushing or pulling on a free link 630 which in turn causes the mirror to rotate about the hinge joint 620.

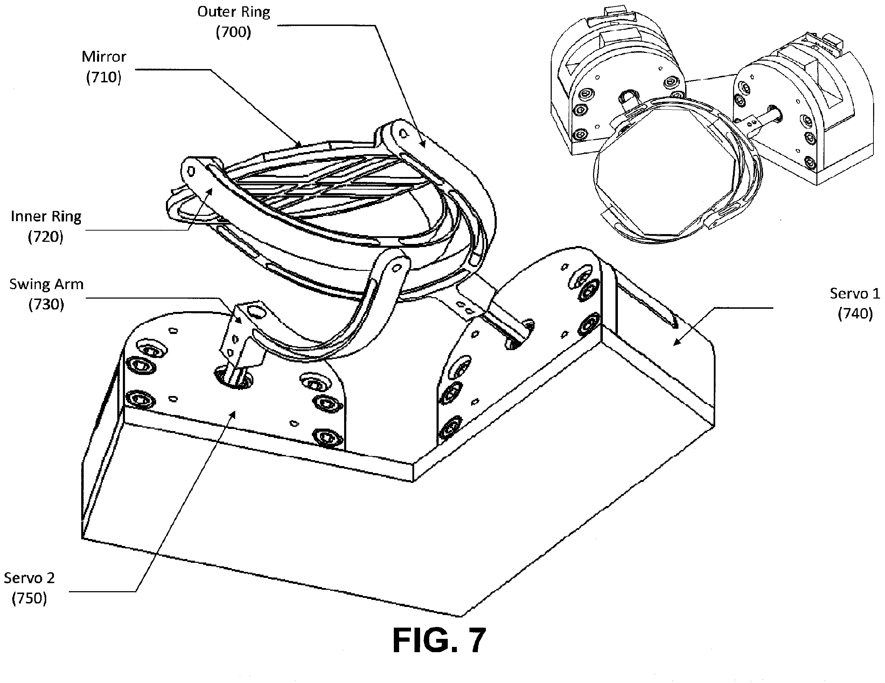

In another embodiment, and as depicted in Fig. 7, a five link spherical closed kinematic chain mechanism provides simultaneous control of two mutually independent angular positions of mirror. In this configuration, servo 1 (740) and servo 2 (750) are fixed, creating a virtual base link between them (link 1). Servo 1 (740) drives an outer ring 700 (link 2), positioning one angular axis of the mirror. Servo 2 (750) drives swing arm 730, causing inner ring 720 to position a second axis of the mirror's position independently from the first axis. Output shafts of servo 1 and servo 2 may form any angle, so long as the axes of all revolute joints intersect at a single point. However, in a preferred embodiment, these axes form an angle less than 90 degrees, for example 60 degrees so that the mirror 710 may protrude through a hole in the enclosure. This approach provides the means to drive a single mirror, minimizing light loss and optical distortion while keeping mechanical complexity to a minimum.

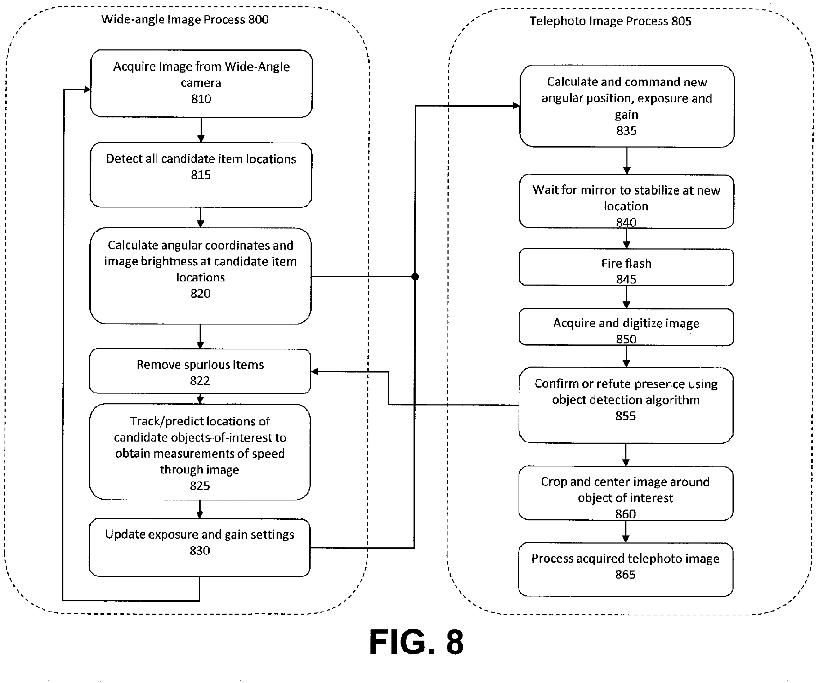

Fig. 8 depicts the steps implementing one particular technique for locating and identifying objects in a scene that includes a wide-angle image processing stage 800 and a telephoto image processor stage 805.

In the wide-angle image stage 800, candidate objects of interest are identified (step 815) from a low-resolution, wide-angle image of the scene acquired in step 810. Due to the low resolution and quality of this image, this stage may produce spurious candidate objects in addition to legitimate ones. For each candidate object, the angular coordinates of the object, along with its brightness in the image are recorded along with camera exposure and gain (step 820). Using this recorded information, objects are labeled and tracked over time (step 825), permitting removal of some spurious candidate locations based on feedback from the telephoto image process (step 822) as well as prediction of the candidate object's location in the next few frames (step 825).

Once a candidate object has been located and tracked for a number of frames, its predicted next-frame coordinates and brightness information are provided to the telephoto image processor. Using the brightness information, as well as information about its own optical path, the desired level of exposure and gain needed to obtain a high-quality image of the object are calculated (step 830). The required mirror position is then determined and commands are issued to the mirror control assembly along with the requested exposure and gain (step 835). After a brief delay for the mirror to stabilize (step 840), the flash is fired (step 845) and the image is acquired.

Once an image is acquired at the candidate object location (step 850), the presence (or, in some cases, the absence) of the object of interest within the video frame is determined (step 855). Various image processing algorithms for object detection (such as the Scale Invariant Feature Transform (SIFT), Haar Cascade Classifiers, Edge filtering and heuristics) may be used to confirm or refute the presence of an object of interest. If the object is no longer present in the image, feedback is sent to the wide-angle image process (step 822) in order to remove the spuriously tracked object.

If the presence of an object of interest is detected, further processing may take place in order to recognize, read or classify this object on the telephoto image process (step 865). In order to recognize, read or classify the object of interest, off-the-shelf computer vision and video processing algorithms are used.

The telephoto camera exposure settings (gain and exposure time) may be controlled based on feedback from the wide-angle camera image processing module that attempts to quantify the brightness of each target object in a scene. This information can then be used to set the Telephoto camera's exposure properties differently for each object in a scene in order to obtain high contrast images.

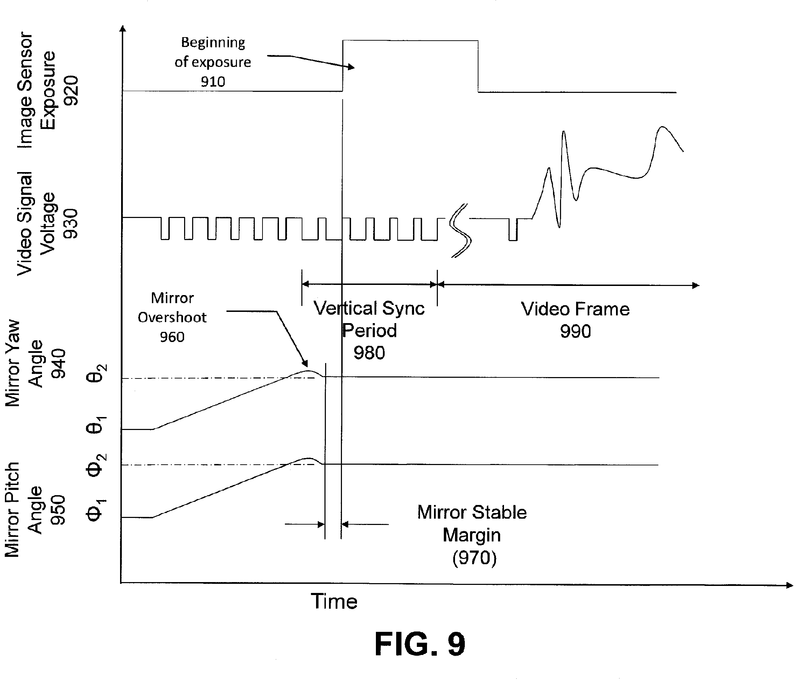

Fig. 9 graphically illustrates the relative timing of various components occurring as a result of implementing the process described in Fig. 8. Video signal 930 is periodic in nature, with vertical synchronization periods 980 being preceded and followed by video frames 990. Synchronously, image exposure 920 occurs at a fixed time in relation to each vertical synchronization period 980. Thus, using only the vertical synchronization period as a fixed timing reference, changes in mirror yaw 940 and pitch 950 servo motor positions may be controlled so that they are complete and the motors are stationary (allowing sufficient time for position overshoot 960) an interval of time 970 prior to the beginning of exposure 910. In this manner, the telephoto camera may acquire images which are free of blur caused by the motion of the moving mirror assembly. At the same time, by reducing the mirror stable margin 970 to a minimum positive value, the moving mirror assembly is allowed the maximum time to complete its movements between successive image exposures without degradation in image quality.

Certain functional components described above may be implemented as stand-alone software components or as a single functional module. In some embodiments the components may set aside portions of a computer's random access memory image capture, image processing and mirror control steps described above. In such an embodiment, the program or programs may be written in any one of a number of high-level languages, such as FORTRAN, PASCAL, C, C++, C#, Java, Tcl, PERL, or BASIC. Further, the program can be written in a script, macro, or functionality embedded in commercially available software, such as EXCEL or VISUAL BASIC.

Additionally, the software may be implemented in an assembly language directed to a microprocessor resident on a computer. For example, the software can be implemented in Intel 80x86 assembly language if it is configured to run on an IBM PC or PC clone. The software may be embedded on an article of manufacture including, but not limited to, computer-readable program means such as a floppy disk, a hard disk, an optical disk, a magnetic tape, a PROM, an EPROM, or CD-ROM.

## Claims

1. A device for detecting and tracking movement of objects of interest within a scene (305), the device comprising:
a wide-angle camera (105, 200) configured to acquire an image of the scene and to simultaneously detect a plurality of objects of interest within the scene (305);
a telephoto camera (120, 240) configured to sequentially acquire a high-resolution image of each of the objects of interest;
a moving mirror assembly (110, 205) for adjusting an aim of the telephoto camera;
an image processor (165, 185) configured to: (a) for each new video frame acquired by the telephoto camera (i) identify a location of one of the plurality of objects of interest within the scene (305) using the image acquired by the wide-angle camera and (ii) control movement of the mirror assembly (110, 205) such that the telephoto camera (120, 240) is aimed at the one of the plurality of objects of interest and (b) create a single video sequence of the high- resolution images of each of the plurality of objects of interest,
wherein a feed of the telephoto camera (120, 240) corresponding to the single video sequence is divided into a plurality of sub-feeds, each sub-feed having a frame-rate approximately equal to a frame-rate of the feed of the telephoto camera divided by a number of the plurality of objects of interest and the single video sequence comprises a plurality of sub-videos, each comprising a plurality of high-resolution video frames and corresponding to one of the objects of interest.

2. The device of claim 1 further comprising a processor (196) for executing a computer executable program to identify each of the objects of interest based on the high-resolution images.

3. The device of claim 1 wherein the mirror assembly (110, 205) positions a collimated infrared flash (115) for targeted illumination of the objects of interest, the collimated infrared flash comprising either one of a pulsed infrared laser or one or more infrared light emitting diodes (LEDs).

4. The device of claim 1 wherein the moving mirror assembly (110, 205) comprises angular magnetic ring encoders (400).

5. The device of claim 4 further comprising two voice coil motors (210) connected by a five-link planar closed kinematic chain (700, 720, 730, 740, 750) which, when activated, permit the mirror assembly to move about two rotational degrees of freedom.

6. The device of claim 5 further comprising a slide bearing that constrains a central point on the mirror assembly in a sagittal plane.

7. The device of claim 1 wherein the moving mirror assembly (110, 205) comprises two mirrors that are each controlled by separate motors.

8. The device of claim 1 wherein the moving mirror assembly (110, 205) comprises a deformable reflective surface, the shape of which is controlled by a set of actuators.

9. The device of claim 1 wherein the moving mirror assembly further comprises a tube (650), a pin joint (620) and a push rod (640) for controlling positioning of the mirror assembly about a first and second axis.

10. The device of claim 1 further comprising a targeted sensor configured to uniquely identify the object of interest wherein the targeted sensor detects and identifies one or more of cellular telephone electronic serial numbers (ESNs), International Mobile Equipment Identity (IMEI) codes, and 802.15 (Bluetooth) MAC addresses.

11. The device of claim 1 further comprising a video compression module (150).

12. The device of claim 1 wherein the image processor (165, 185) is further configured to adjust video gain and exposure parameters of the captured images.

13. The device of claim 1 wherein the image processor (165, 185) is further configured to detect human anatomical features within the wide-angle camera's field-of-view in order to direct the telephoto camera's field-of-view thus facilitating human facial recognition.

14. The device of claim 1 wherein the image processor (165, 185) is further configured to detect characters on a licence plate within the wide-angle camera's field-of-view in order to direct the telephoto camera's field-of-view.

15. A method for identifying and tracking movement of a plurality of objects of interest within a scene (305), the method comprising:
acquiring (810) an image of the scene using a first image sensor, wherein the first image sensor comprises a wide-angle camera (105) aimed at the scene (305);
(a) for each new frame of a plurality of video frames acquired by a second video sensor:
(i) detecting (815) a location of one of the plurality of objects of interest within the scene in the image acquired by the first image sensor
(ii) mechanically adjusting a mirror assembly (110) such that the detected location the one of the plurality of objects of interest is presented to the second image sensor (120); and
(b) acquiring (850) images of the plurality of objects using the second image sensor (120), wherein the images of the objects are substantially higher in resolution than the image of the scene;
creating a single video sequence of the high-resolution images of each of the plurality of objects of interest, wherein a feed of the second image sensor (120) corresponding to the single video sequence is divided into a plurality of sub-feeds, each sub-feed having a frame-rate approximately equal to a frame-rate of the feed of the second image sensor divided by a number of the plurality of objects of interest and the single video sequence comprises a plurality of sub-videos, each comprising a plurality of high resolution video frames and corresponding to one of the objects of interest, and
identifying the object.

16. The method of claim 15 further comprising calculating (820) angular coordinates of the locations of the objects of the image.

17. The method of claim 15 further comprising adjusting conformation of the mirror assembly (110) as to direct the field-of-view of the second image sensor (120) towards the objects.

18. The method of claim 15 wherein the adjustments to the mirror assembly (110) comprise adjusting angular positions of the mirror assembly within two degrees of freedom.

## Patentansprüche

1. Vorrichtung zum Detektieren und Verfolgen der Bewegung von interessanten Objekten innerhalb einer Szene (305), wobei die Vorrichtung Folgendes umfasst:
eine Weitwinkelkamera (105, 200), welche konfiguriert ist, um ein Bild der Szene zu erfassen und gleichzeitig eine Mehrzahl von interessanten Objekten innerhalb der Szene (305) zu detektieren;
eine Telefotokamera (120, 240), welche konfiguriert ist, um sequentiell ein Hochauflösungsbild jedes interessanten Objekts zu erfassen;
eine bewegliche Spiegelanordnung (110, 205) zum Einstellen eines Ziels der Telefotokamera;
einen Bildprozessor (165, 185), welcher konfiguriert ist, zum: (a) für jedes neue durch die Telefotokamera erfasste Videoframe, (i) Identifizieren einer Position eines der Mehrzahl von interessanten Objekten innerhalb der Szene (305) durch Verwenden des von der Weitwinkelkamera erfassten Bildes und (ii) Steuern der Bewegung der Spiegelanordnung (110, 205), sodass die Telefotokamera (120, 240) auf das eine der Mehrzahl von interessante Objekten gerichtet wird und (b) Erzeugen einer einzelnen Videosequenz von den Hochauflösungsbildern jedes der Mehrzahl von interessanten Objekten,
wobei ein Feed der Telefotokamera (120, 240), welches der einzelnen Videosequenz entspricht, in eine Mehrzahl von Sub-Feeds unterteilt wird, wobei jedes Sub-Feed eine Frame-Rate aufweist, welche annäherungsweise einer Frame-Rate des Feeds der Telefotokamera, dividiert durch eine Anzahl von der Mehrzahl von interessanten Objekten entspricht, und wobei die einzelne Videosequenz eine Mehrzahl von Sub-Videos umfasst, welche jeweils eine Mehrzahl von Hochauflösungsbildframes umfassen und einem der interessanten Objekte entsprechen.

2. Vorrichtung nach Anspruch 1, ferner umfassend einen Prozessor (196) zum Ausführen eines computerausführbaren Programms, um jedes der interessanten Objekte basierend auf den Hochauflösungsbildern zu identifizieren.

3. Vorrichtung nach Anspruch 1, wobei die Spiegelanordnung (110, 205) ein kollimiertes Infrarot-Blitzlicht (115) zur gezielten Beleuchtung der interessanten Objekte positioniert, wobei das kollimierte Infrarot-Blitzlicht entweder einen gepulsten Infrarotlaser oder eine oder mehrere Infrarot-Lichtemitterdioden (LED) umfasst.

4. Vorrichtung nach Anspruch 1, wobei die bewegliche Spiegelanordnung (110, 205) magnetische ringförmige Winkelkodierer (400) umfasst.

5. Vorrichtung nach Anspruch 4, ferner umfassend zwei Schwingspulenmotore (210), welche durch eine fünfgliedrige ebene geschlossene kinematische Kette (700, 720, 730, 740, 750) verbunden sind, welche, wenn aktiviert, der Spiegelanordnung erlauben, sich um zwei rotatorische Freiheitsgrade zu bewegen.

6. Vorrichtung nach Anspruch 5, ferner umfassend ein Gleitlager, welches einen Mittelpunkt der Spiegelanordnung in einer sagittalen Ebene begrenzt.

7. Vorrichtung nach Anspruch 1, wobei die bewegliche Spiegelanordnung (110, 205) zwei Spiegel umfasst, welche jeweils durch separate Motoren gesteuert sind.

8. Vorrichtung nach Anspruch 1, wobei die bewegliche Spiegelanordnung (110, 205) eine verformbare reflektierende Oberfläche umfasst, dessen Form durch eine Reihe von Aktuatoren gesteuert wird.

9. Vorrichtung nach Anspruch 1, wobei die bewegliche Spiegelanordnung ferner ein Rohr (650), ein Drehgelenk (620) und eine Schubstange (640) zum Steuern der Position der Spiegelanordnung um eine erste und zweite Achse umfasst.

10. Vorrichtung nach Anspruch 1, ferner umfassend einen gezielten Sensor, welcher konfiguriert ist, um das interessante Objekt eindeutig zu identifizieren, wobei der gezielte Sensor einen oder mehrere von zellularen telefonischen elektronischen Seriennummern (ESN), internationalen Mobile Equipment Identity Codes (IMEI) und 802.15 (Bluetooth) MAC-Adressen detektiert und identifiziert.

11. Vorrichtung nach Anspruch 1, ferner umfassend ein Videokompressionsmodul (150).

12. Vorrichtung nach Anspruch 1, wobei der Bildprozessor (165, 185) ferner konfiguriert ist, um Videoverstärkungs- und Belichtungsparameter der erfassten Bilder einzustellen.

13. Vorrichtung nach Anspruch 1, wobei der Bildprozessor (165, 185) ferner konfiguriert ist, um menschliche anatomische Merkmale innerhalb des Sichtfelds der Weitwinkelkamera zu detektieren, um das Sichtfeld der Telefotokamera zu richten, um dadurch eine menschliche Gesichtserkennung zu ermöglichen.

14. Vorrichtung nach Anspruch 1, wobei der Bildprozessor (165, 185) ferner konfiguriert ist, um Zeichen auf einem Nummernschild innerhalb des Sichtfelds der Weitwinkelkamera zu detektieren, um das Sichtfeld der Telefotokamera zu richten.

15. Verfahren zum Identifizieren und Verfolgen einer Bewegung einer Mehrzahl von interessanten Objekten innerhalb einer Szene (305), wobei das Verfahren Folgendes umfasst:
Erfassen (810) eines Bildes der Szene durch Verwendung eines ersten Bildsensors, wobei der erste Bildsensor eine Weitwinkelkamera (105) umfasst, welche auf die Szene (305) gerichtet ist;
(a) für jedes neue durch einen zweiten Videosensor erfasste Videoframe, einer Mehrzahl von Videoframes:
(i) Detektieren (815) einer Position eines der Mehrzahl von interessanten Objekten innerhalb der Szene im vom ersten Bildsensor erfassten Bild
(ii) mechanisches Einstellen einer Spiegelanordnung (110), sodass die detektierte Position des einen der Mehrzahl von interessanten Objekten an den zweiten Bildsensor (120) präsentiert wird; und
(b) Erfassen (850) von Bildern der Mehrzahl von Objekten durch Verwendung des zweiten Bildsensors (120), wobei die Bilder der Objekte eine im Wesentlichen höhere Auflösung aufweisen als das Bild der Szene;
Erzeugen einer einzelnen Videosequenz von den Hochauflösungsbildern jedes der Mehrzahl von interessanten Objekten,
wobei ein Feed des zweiten Bildsensors (120), welches der einzelnen Videosequenz entspricht, in eine Mehrzahl von Sub-Feeds unterteilt wird, wobei jedes Sub-Feed eine Frame-Rate aufweist, welche annäherungsweise einer Frame-Rate des Feeds des zweiten Bildsensors, dividiert durch eine Anzahl von der Mehrzahl von interessanten Objekten entspricht, und wobei die einzelne Videosequenz eine Mehrzahl von Sub-Videos umfasst, welche jeweils eine Mehrzahl von Hochauflösungsvideoframes umfassen und einem der interessanten Objekten entsprechen, und
Identifizieren des Objekts.

16. Verfahren nach Anspruch 15, ferner umfassend das Berechnen (820) der Winkelkoordinaten der Positionen der Objekte des Bilds.

17. Verfahren nach Anspruch 15, ferner umfassend das Einstellen der Ausbildung der Spiegelanordnung (110), um das Sichtfeld des zweiten Bildsensors (120) zu den Objekten hin zu richten.

18. Verfahren nach Anspruch 15, wobei die Einstellungen der Spiegelanordnung (110) das Einstellen der Winkelpositionen der Spiegelanordnung innerhalb von zwei Freiheitsgraden umfassen.

## Revendications

1. Dispositif pour détecter et suivre le déplacement d'objets d'intérêt à l'intérieur d'une scène (305), le dispositif comprenant :
une caméra grand-angle (105, 200) qui est configurée de manière à ce qu'elle acquière une image de la scène et de manière à ce que, de façon simultanée, elle détecte une pluralité d'objets d'intérêt à l'intérieur de la scène (305) ;
une caméra à téléobjectif (120, 240) qui est configurée de manière à ce qu'elle acquière de façon séquentielle une image haute résolution de chacun des objets d'intérêt ;
un assemblage de miroir(s) mobile (110, 205) pour régler une visée de la caméra à téléobjectif ;
un processeur d'image (165, 185) qui est configuré de manière à ce qu'il réalise les actions qui suivent : (a) pour chaque nouveau photogramme de vidéo qui est acquis au moyen de la caméra à téléobjectif, (i) l'identification d'une localisation de l'un de la pluralité d'objets d'intérêt à l'intérieur de la scène (305) en utilisant l'image qui est acquise au moyen de la caméra grand-angle et (ii) la commande du déplacement de l'assemblage de miroir(s) (110, 205), de telle sorte que la caméra à téléobjectif (120, 240) soit visée au niveau de l'un de la pluralité d'objets d'intérêt et (b) la création d'une unique séquence de vidéo des images haute résolution de chacun de la pluralité d'objets d'intérêt ; dans lequel :
un flux d'alimentation de la caméra à téléobjectif (120, 240) qui correspond à l'unique séquence de vidéo est divisé selon une pluralité de sous-flux d'alimentation, chaque sous-flux d'alimentation présentant un débit en termes de photogrammes qui est approximativement égal à un débit en termes de photogrammes du flux d'alimentation de la caméra à téléobjectif divisé par un nombre de la pluralité d'objets d'intérêt, et l'unique séquence de vidéo comprend une pluralité de sous-vidéos, chacune comprenant une pluralité de photogrammes de vidéo haute résolution et correspondant à l'un des objets d'intérêt.

2. Dispositif selon la revendication 1, comprenant en outre un processeur (196) pour exécuter un programme pouvant être exécuté par ordinateur de manière à identifier chacun des objets d'intérêt sur la base des images haute résolution.

3. Dispositif selon la revendication 1, dans lequel l'assemblage de miroir(s) (110, 205) positionne un flash infrarouge collimaté (115) pour l'éclairage ciblé des objets d'intérêt, le flash infrarouge collimaté comprenant soit un laser infrarouge pulsé, soit une ou plusieurs diode(s) émettrice(s) de lumière infrarouge (LED).

4. Dispositif selon la revendication 1, dans lequel l'assemblage de miroir(s) mobile (110, 205) comprend des codeurs en anneau magnétiques angulaires (400).

5. Dispositif selon la revendication 4, comprenant en outre deux moteurs à bobine mobile (210) qui sont connectés au moyen d'une chaîne cinématique fermée plane à cinq liaisons (700, 720, 730, 740, 750), lesquels moteurs, lorsqu'ils sont activés, permettent le déplacement de l'assemblage de miroir(s) sur deux degrés de liberté en rotation.

6. Dispositif selon la revendication 5, comprenant en outre un palier à coulissement qui contraint un point central de l'assemblage de miroir(s) dans un plan sagittal.

7. Dispositif selon la revendication 1, dans lequel l'assemblage de miroir(s) mobile (110, 205) comprend deux miroirs qui sont chacun commandés par des moteurs séparés.

8. Dispositif selon la revendication 1, dans lequel l'assemblage de miroir(s) mobile (110, 205) comprend une surface réfléchissante pouvant être déformée dont la forme est commandée au moyen d'un jeu d'actionneurs.

9. Dispositif selon la revendication 1, dans lequel l'assemblage de miroir(s) mobile comprend en outre un tube (650), une articulation à tourillon (620) et une tige de poussée (640) pour commander le positionnement de l'assemblage de miroir(s) autour de premier et second axes.

10. Dispositif selon la revendication 1, comprenant en outre un capteur ciblé qui est configuré de manière à ce qu'il identifie de façon unique l'objet d'intérêt, dans lequel le capteur ciblé détecte et identifie un ou plusieurs élément(s) informationnel(s) pris parmi des numéros de série électroniques (ESN) de téléphone cellulaire, des codes d'identité international d'équipement mobile (IMEI) et des adresses MAC 802.15 (Bluetooth).

11. Dispositif selon la revendication 1, comprenant en outre un module de compression de vidéo (150).

12. Dispositif selon la revendication 1, dans lequel le processeur d'image (165, 185) est en outre configuré de manière à ce qu'il règle un gain de vidéo et des paramètres d'exposition des images capturées.

13. Dispositif selon la revendication 1, dans lequel le processeur d'image (165, 185) est en outre configuré de manière à ce qu'il détecte des caractéristiques anatomiques d'un être humain à l'intérieur du champ de vision de la caméra grand-angle afin de diriger le champ de vision de la caméra à téléobjectif dans le but d'ainsi faciliter la reconnaissance du visage d'un être humain.

14. Dispositif selon la revendication 1, dans lequel le processeur d'image (165, 185) est en outre configuré de manière à ce qu'il détecte des caractères sur une plaque minéralogique à l'intérieur du champ de vision de la caméra grand-angle afin de diriger le champ de vision de la caméra à téléobjectif.

15. Procédé pour identifier et suivre le déplacement d'une pluralité d'objets d'intérêt à l'intérieur d'une scène (305), le procédé comprenant :
l'acquisition (810) d'une image de la scène en utilisant un premier capteur d'image, dans lequel le premier capteur d'image comprend une caméra grand-angle (105) qui est visée au niveau de la scène (305) ;
(a) pour chaque nouveau photogramme d'une pluralité de photogrammes de vidéo qui sont acquis au moyen d'un second capteur de vidéo :
(i) la détection (815) d'une localisation de l'un de la pluralité d'objets d'intérêt à l'intérieur de la scène dans l'image qui est acquise au moyen du premier capteur d'image ;
(ii) le réglage mécanique d'un assemblage de miroir(s) (110) de telle sorte que la localisation détectée de l'un de la pluralité d'objets d'intérêt soit présentée au second capteur d'image (120) ; et
(b) l'acquisition (850) d'images de la pluralité d'objets d'intérêt en utilisant le second capteur d'image (120), dans lequel les images des objets d'intérêt présentent une résolution sensiblement plus élevée que l'image de la scène ;
la création d'une unique séquence de vidéo des images haute résolution de chacun de la pluralité d'objets d'intérêt,
dans lequel un flux d'alimentation du second capteur d'image (120) qui correspond à l'unique séquence de vidéo est divisé selon une pluralité de sous-flux d'alimentation, chaque sous-flux d'alimentation présentant un débit en termes de photogrammes qui est approximativement égal à un débit en termes de photogrammes du flux d'alimentation du second capteur d'image divisé par un membre de la pluralité d'objets d'intérêt, et l'unique séquence de vidéo comprend une pluralité de sous-vidéos, chacune comprenant une pluralité de photogrammes de vidéo haute résolution et correspondant à l'un des objets intérêt ; et
l'identification de l'objet.

16. Procédé selon la revendication 15, comprenant en outre le calcul (820) de coordonnées angulaires des localisations des objets de l'image.

17. Procédé selon la revendication 15, comprenant en outre le réglage de la conformation de l'assemblage de miroir(s) (110) de manière à diriger le champ de vision du second capteur d'image (120) en direction des objets.

18. Procédé selon la revendication 15, dans lequel les réglages apportés à l'assemblage de miroir(s) (110) comprennent le réglage des positions angulaires de l'assemblage de miroir(s) à l'intérieur de deux degrés de liberté.
